# EUROPEAN PATENT APPLICATION

(11) **EP 1 990 711 A2**
(43) Date of publication of application: **12.11.2008**
(21) Application number: 08008431.2
(22) Date of filing: 05.05.2008
(51) Int. Cl.: G06F 3/048, H04M 1/247

(54) **Tab browsing in mobile communication terminal**

(30) Priority: 09.05.2007 KR 20070045070
(71) Applicant: LG Electronics Inc., Seoul 150-010 (KR)
(72) Inventor: Kim, Mee Young, Seoul 153-023 (KR); Cho, Jang Muk, Seoul 153-023 (KR)
(74) Representative: Katérle, Axel

(57) **Abstract**

A method of controlling a mobile communication terminal. The method includes displaying at least first and second display objects on a display screen, each display object having a tab corresponding to the respective displayed object, recognizing an input signal that selects a corresponding tab, and displaying a preview window on the display screen in response to the selecting step, the preview window providing information of an underlying display object being partially displayed.

## Description

This application claims priority to Korean Patent Application No. 10-2007-0045070 filed on May 9, 2007 in the Korean Intellectual Property Office, the disclosure of which is incorporated herein by reference in its entirety.

### BACKGROUND OF THE INVENTION

### 1. Field of the Invention

The present invention relates to a mobile communication terminal and corresponding method having a tab browsing function which allows a user to easily identify underlying display objects that are currently being only partially displayed.

### 2. Description of the Related Art

In general, mobile communication devices such as mobile phones or personal digital assistants (PDAs) provide not only basic functions such as voice call and Short Message Service (SMS) functions, but also provide various additional functions. Further, mobile terminals are now including Phase change Random Access Memory (PRAM) chips as core chips and ultra high pixel Complementary Metal-Oxide Semiconductor (CMOS) chips as camera modules.

In addition, the types of screens that can be viewed using mobile communication terminals are diverse. Further, the user generally needs to view a variety of screens on the mobile communication terminal. Therefore, the pluralities of screens are overlaid on top of each other (i.e., screens behind a currently displayed screen are only partially displayed). Therefore, to view a partially displayed screen, the user must select a tab corresponding to the partially displayed screen. Thus, the user must first select the tab of the partially displayed screen to view information on the respective screen. This is particularly cumbersome when the user has several screens to view.

### SUMMARY OF THE INVENTION

Accordingly, one object of the present invention is to address the above-noted and other problems.

Another object of the present invention is to provide a mobile communication terminal and corresponding method that allows a user to identify, via a preview window, underlying display objects that are currently being partially displayed on the display screen.

To achieve these and other advantages and in accordance with the purpose of the present invention, as embodied and broadly described herein, the present invention provides in one aspect a method of controlling a mobile communication terminal. The method includes displaying at least first and second display objects on a display screen, each display object having a tab corresponding to a respective displayed object, recognizing an input signal that selects a corresponding tab, and displaying a preview window on the display screen in response to the selecting step. Further, the preview window provides information of an underlying display object being partially displayed.

In another aspect, the present invention provides a mobile communication terminal including a display unit configured to display at least first and second display objects on a display screen, each display object having a tab corresponding to a respective displayed object, a selecting unit configured to select a corresponding tab, and a control unit configured to control the display unit to display a preview window on the display screen in response to the selected corresponding tab. Further, the preview window provides information of an underlying display object being partially displayed.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:

FIG. 1 is a block diagram of a mobile communication terminal according to an embodiment of the present invention;

FIG. 2 is an overview of a web page displayed by a display unit of the mobile communication illustrated in FIG. 1 according to an embodiment of the present invention;

FIG. 3 is an overview of a preview window displayed by the mobile communication terminal illustrated in FIG. 1 according to an embodiment of the present invention;

FIG. 4 is an overview of a preview window displayed by the mobile communication terminal illustrated in FIG. 1 according to another embodiment of the present invention;

FIG. 5 is an overview of a preview window displayed by the mobile communication terminal illustrated in FIG. 1 according to yet another embodiment of the present invention;

FIG. 6 is an overview illustrating a menu window for setting a preview window display function in the mobile communication terminal illustrated in FIG. 1 according to an embodiment of the present invention;

FIG. 7 is an overview illustrating a preview window providing a preview of a display object according to an embodiment of the present invention; and

FIG. 8 is a flowchart illustrating a method of controlling a mobile communication terminal having a tab browsing function according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

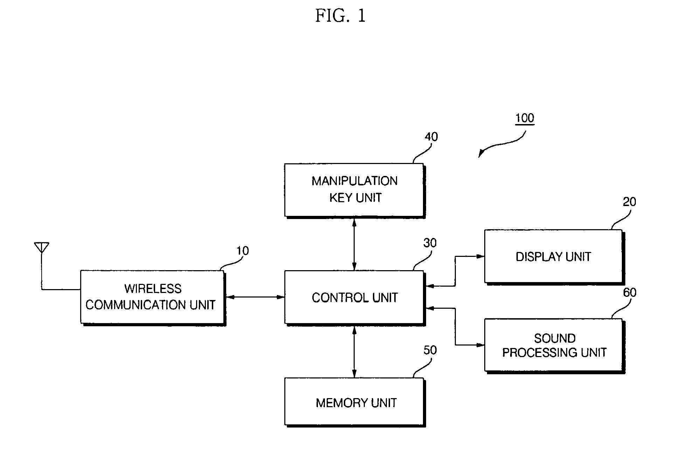

Turning first to FIG. 1, which is a block diagram of a mobile communication terminal 100 according to an embodiment of the present invention. As shown in FIG. 1, the mobile terminal 100 includes a wireless communication unit 10, a display unit 20, a control unit 30, a manipulation key unit 40, a memory unit 50 and a sound processing unit 60.

Further, the display unit 20 displays a status of the terminal 100 and other relevant information to the user. The display unit 20 also displays menus used for controlling an operation of the terminal 100 so as to allow the user to input an operation command. In addition, the wireless communication unit 10 provides an interface for wireless communication with a base station through an antenna. Further, the wireless communication unit 10 includes, for example, a duplex filter for filtering a signal received through the antenna, a power amplifier for amplifying a transmit signal, a frequency up-converting circuit in a transmission path, and a frequency down-converting circuit in a reception path.

The display unit 20 may include a liquid crystal display (LCD) panel and an LCD panel driver. The display unit 20 may also include various display elements other than an LCD. For example, the display unit 20 may include a touch screen panel and a touch screen panel controller. In this instance, a command may be input to the display unit 20 by appropriately touching the touch screen of the display unit 20.

In addition, the control unit 30 controls the overall operations of the terminal 100. For example, the control unit 30 controls the transmission/reception of signals by the wireless communication unit 10. Further, the control unit 30 is connected to the display unit 20 and can thus display various information such as the state of a call received/dialed via the wireless communication unit 10 or a state of downloading data via the wireless communication unit 10. The control unit 30 also outputs sounds via the sound processing unit 60, and processes sounds input thereto via the sound processing unit 60.

In addition, the memory unit 50 stores data used for controlling the terminal 100 and other various data such as a phone book that the user creates. The control unit 30 also executes an application by accessing application data present in the memory unit 50. Examples of the application executed by the control unit 30 include a text message transmission application, an email transmission application, and a photographing application. More specifically, the application executed by the control unit 30 may be an application corresponding to a command input to the mobile terminal 100 via the manipulation key unit 40.

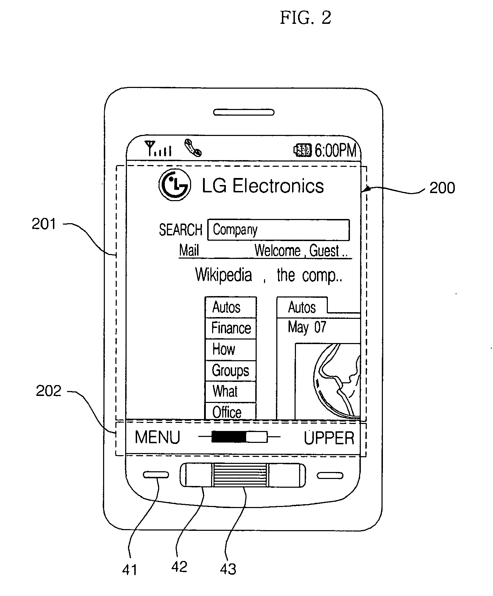

Turning next to FIG. 2, which is an overview illustrating a display screen 200 of the display unit 20 of the terminal 100 illustrated in FIG. 1. As shown in FIG. 2, a web page window 201 and a soft key window 202 are displayed on the display screen 200. The soft key window 202 includes one or more soft keys for controlling a web browser that displays web pages.

Further, the soft keys in the soft key window 202 may be manipulated using a plurality of keys 41, 42 and 43, which are disposed on a lower side of the soft key window 202. The key 43 may be a wheel key, and the key 42 disposed on one side of the wheel key 43 may be a side key. Also, a web page displayed in the web page window 201 can be scrolled up and down using the wheel key 43, and can be scrolled to the left and right using the side key 42. The key 41 may be an enter key or selection key.

In addition, a web browser executed by the mobile terminal 100 can display web pages available on the Internet in a full-browse mode. Web pages displayed in the full-browse mode are generally larger than the display screen 200. Therefore, for a web page that is larger than the display screen 200, a scroll bar is generated in the web page window 201 so that a web page displayed in the web page window 201 can be scrolled up and down or to the left and right.

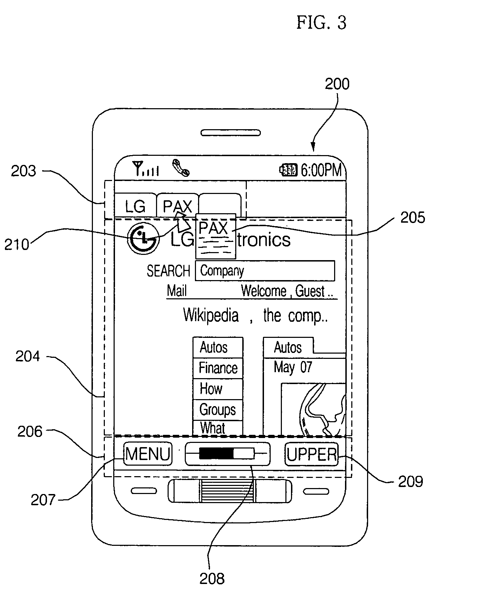

Next, FIG. 3 is an overview of a preview window displayed by the mobile communication terminal 100 illustrated in FIG. 1 according to an embodiment of the present invention. As shown in FIG. 3, when two or more web browser windows are opened, a tab window 203 including a number of tabs respectively corresponding to the number of displayed web pages is displayed on the display screen 200.

Further, even when two or more web browser windows are opened, only one of the web pages is displayed in a web page window 204. Thus, the user can only view the web page currently being displayed in the web page window 204. More specifically, when the user moves a pointing cursor 210 to one of the tabs (e.g., the tab 'PAX') of the tab window 203, other than the tab corresponding to the web page currently being displayed in the web page window 204, a preview window 205 is displayed that provides a preview of the web page corresponding to the tab 'PAX.'

In addition, the preview window 205 may be displayed on the upper, lower, left, or right side of the tab 'PAX.' FIG. 3 illustrates an example in which the preview window 205 is displayed on the lower side of the 'PAX' tab. Further, the preview window 205 may be moved on the display screen 200 or may be enlarged or reduced upon the request of the user. For example, the user may use a cursor or other input command to move or change a size of the preview window 205 (e.g, the user can move the preview window 205 using directional keys on the terminal 100). The user can also use his or her two fingers toward each other to touch and drag their two fingers on the preview window 205 away from each other to increase the size of the preview window 205, or touch and drag their two fingers toward each other on the preview window 205 to decrease a size of the preview window 205.

The user may also select the preview window 205 by manipulating a key included in the manipulation key unit 40 in a predefined manner or by double touching the preview window, for example. Further, when the preview window 205 is selected, the color of the inside or the frame of the preview window 205 may be changed so that the user can easily identify the selection of the preview window 205.

Further, as shown in FIG. 3, the control unit 30 displays a soft key window 206 at the bottom of the web page window 204. In addition, the soft key window 206 includes a soft key 'MENU' 207, a soft key 'UPPER' 209, and an icon 208 which are used to control display objects displayed on the display screen 200.

More specifically, the user may display a menu window including a number of menus for controlling the display screen 200 by manipulating the soft key 'MENU' 207. The menu window may also include a menu for moving or resizing the preview window 205. Further, the user may return to an upper menu or a previous web page by manipulating the soft key 'UPPER' 209. In addition, the preview window 205 may be displayed as a semi-transparent window.

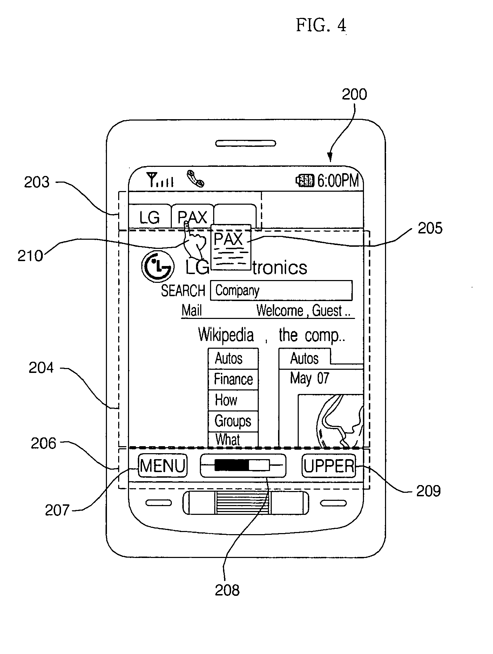

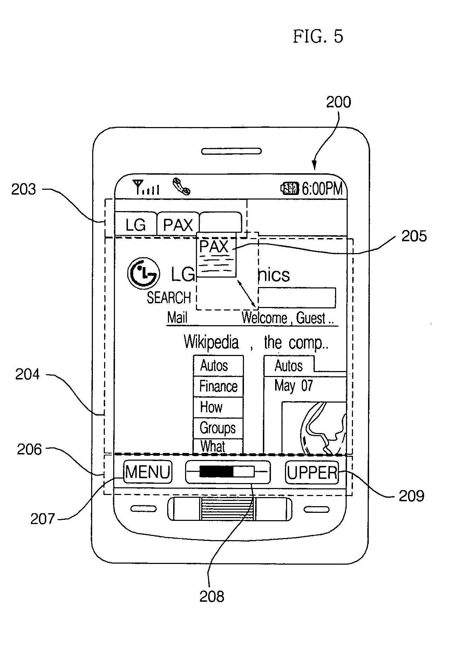

Turning next to FIGS. 4 and 5, which illustrate how to manipulate the preview window 205 when the display unit 20 of FIG. 1 includes a touch screen according to an embodiment of the present invention. In more detail, as shown in FIG. 4, when the user touches one of the tabs in the tab window 203, the touched tab is selected, and a preview window that provides a preview of a web page corresponding to the selected tab is displayed on the display screen 200. For example, when the user touches the tab 'PAX' once, the preview window 205 that provides a preview of the web page corresponding to the tab 'PAX' is displayed on the display screen 200. Thereafter, when the user again touches the tab 'PAX' a predetermined period of time after the appearance of the preview window 205, the preview window 205 disappears from the display screen 200.

On the other hand, if the user touches the tab 'PAX' twice in a row (i.e., a double touching operation), the web page corresponding to the tab 'PAX' is displayed in the web page window 204, instead of displaying the preview window 205.

As shown in Fig. 5, The user may enlarge or reduce the preview window 205 by dragging a boundary of the preview window 205. In addition, the user may move the preview window 205 on the display screen 200 by touching and dragging/moving the preview window 205.

Further, a preview window may be displayed when the user selects a tab. However, to prevent a display object currently being displayed on a display screen from being hidden from view by the preview window, the user may set that a preview window not be displayed on the display screen regardless of the selection of a tab. Also, the number of tabs included in the tab window can be set by the user in advance.

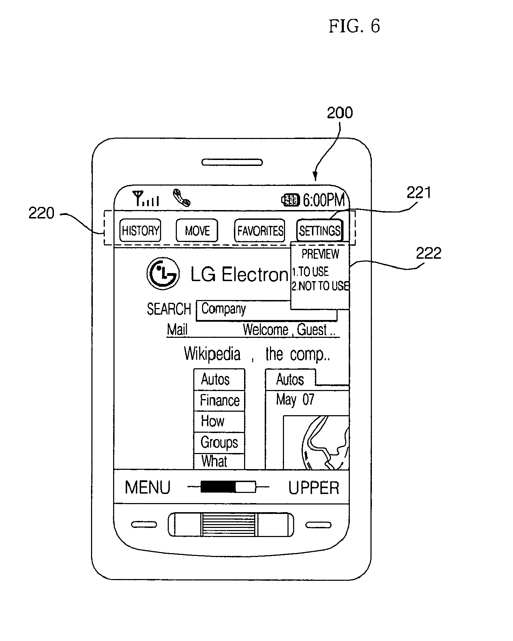

More specifically, referring to FIG. 6, when the user manipulates the soft key 'MENU' 207 in FIG. 5, a menu window 220 is displayed on an upper part of the display screen 200. Then, the user may set a preview window not to appear on the display screen 200 by selecting one of a plurality of default menu items 222 using the 'SET' menu 221. In this instance, no preview window is displayed on the display screen 200 regardless of whether the user selects one of the tabs in the tab window 203.

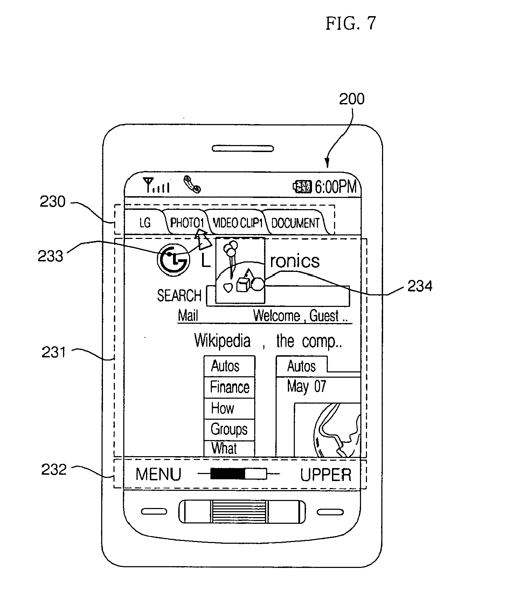

Turning next to FIG. 7, which is an overview illustrating another embodiment of the display screen 200 of the mobile terminal 100 illustrated in FIG. 1. As shown in FIG. 7, the display objects include various types of display objects such as web pages, photos, video clips and documents. In more detail, in FIG. 7, a tab window 230 including a number of tabs respectively corresponding to a number of display objects, a display object window 231 for displaying a display object, and a soft key window 232 including one or more soft keys used for controlling the display screen 200 are displayed on the display screen 200.

In addition, when the user selects one of the tabs in the tab window 230 using a pointing cursor 233, for example, a preview window 234 that provides a preview of a display object corresponding to the selected tab is displayed on the display screen 200. In addition, when the display unit 20 includes a touch screen, the user may select one of the tabs in the tab window 230 using a predefined touching method. Also, the user may move or enlarge/reduce the preview window 234 by dragging the preview window 234 in a predefined touching manner.

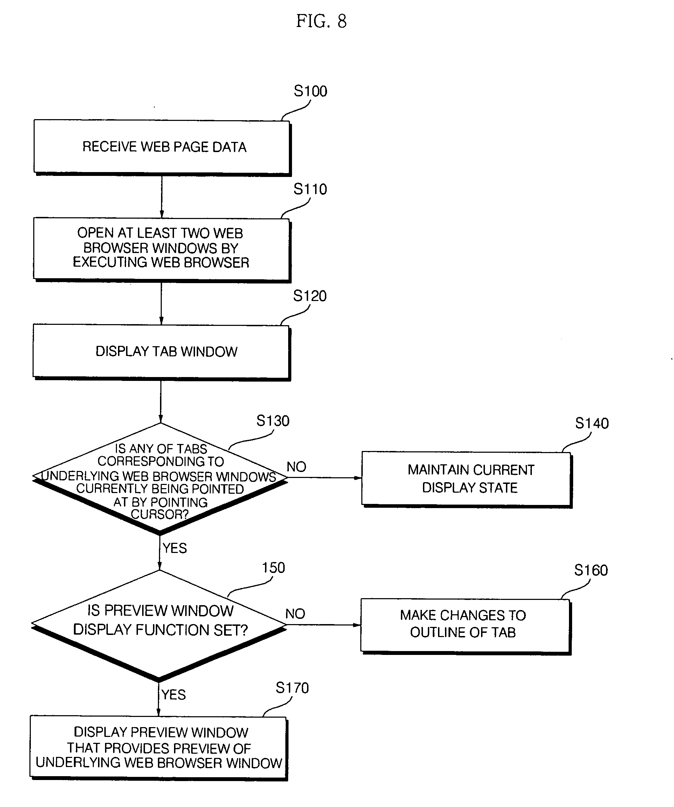

Next, FIG. 8 is a flowchart illustrating a method of controlling a mobile communication terminal having a tab browsing function according to an embodiment of the present invention. FIG. 1 will also be referred to in this description. As shown in FIG. 8, the control unit 30 receives web page data via the wireless communication unit 10 (S100). When the mobile terminal 100 is connected to an external terminal such as a computer via wired network, the web page data may be downloaded onto the mobile communication terminal in a wired manner. The web page data may also be wirelessly downloaded.

Then, the user opens at least two web browser windows by executing a web browser (S110). Further, the web browser windows display a corresponding web page. Also, the web pages may be received via the wireless communication unit 10 or may be previously stored in the memory unit 50. Next, the control unit 30 displays a tab window including a number of tabs respectively corresponding to the displayed web pages (S120).

In addition, the control unit 30 determines whether one of the tabs corresponding to underlying web browser windows is currently being pointed at by a pointing cursor (S130). As discussed above, the underlying web browser windows are partially displayed as shown in FIG. 3. Also, the underlying web browser windows are displayed by the display unit 20 but not fully opened. Hence, a web browser window displayed on a display screen as a tab, but not overlapped by another web browser window, is also an underlying web browser.

Then, when the method determines that none of the tabs are being pointed at by the pointing cursor 233 (No in S130), the control unit 30 maintains a current state of the display screen 200. However, when the method determines that one of the tabs is currently being pointed at by the pointing cursor 233, the control unit 30 determines whether a preview window display function is set in the mobile terminal 100 (S 150).

When the method determines the preview window display function is not set in the mobile communication terminal (No in S 150), the control unit 30 changes the outline of the tab currently being pointed at by the pointing cursor (S160). Further, when the method determines the preview window display function is set in the mobile terminal 100 (Yes in S150), the control unit 30 displays a preview window that provides a preview of the underlying web browser window corresponding to the tab currently being pointed at by the pointing cursor (S 170).

In addition, the present invention can be realized as computer-readable code written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that computer-readable code is written thereto and executed therefrom in a decentralized manner. Functional programs, code, and code segments used for realizing the present invention can be easily construed by one of ordinary skill in the art.

As described above, according to embodiments of the present invention, it is possible to enable a user of a mobile communication terminal to easily identify one or more display objects not currently being displayed on a display screen by providing a preview of the display objects using a tab browsing function and using a preview window.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method of controlling a mobile communication terminal, the method comprising:
displaying at least first and second display objects on a display screen, each display object having a tab corresponding to a respective displayed object;
recognizing an input signal that selects a corresponding tab; and
displaying a preview window on the display screen in response to the selecting step, the preview window providing information of an underlying display object being partially displayed.

2. The method of claim 1, wherein the displaying the preview window comprises displaying the preview window on one of an upper, lower, left, and right side of the corresponding tab.

3. The method of claim 1, wherein the recognizing step comprises recognizing a pointing cursor being moved over the corresponding tab.

4. The method of claim 1, wherein the display screen comprises a touch screen, and
wherein the recognizing step comprises recognizing the corresponding tab has been touched.

5. The method of claim 1, wherein the displaying the preview window comprises displaying the preview window on the display screen as a semi-transparent window.

6. The method of claim 1, further comprising:
moving or enlarging/reducing the preview window in response to a user command.

7. The method of claim 6, wherein the display screen comprises a touch screen, and
wherein the movement or the enlargement/reduction comprises moving or enlarging/reducing the preview window by touching and dragging the preview window on the touch screen.

8. The method of claim 1, further comprising:
selectively turning on and off the step of displaying the preview window.

9. The method of claim 1, further comprising:
setting a number of tabs to be displayed on the display screen.

10. The method of claim 1, wherein the display objects include web pages, photos, video clips, and documents.

11. A mobile communication terminal, comprising:
a display unit configured to display at least first and second display objects on a display screen, each display object having a tab corresponding to a respective displayed object;
a selecting unit configured to select a corresponding tab; and
a control unit configured to control the display unit to display a preview window on the display screen in response to the selected corresponding tab, the preview window providing information of an underlying display object being partially displayed.

12. The mobile communication terminal of claim 11, wherein the control unit controls the display unit to display the preview window on one of an upper, lower, left, and right side of the corresponding tab.

13. The mobile communication terminal of claim 11, wherein the selecting unit comprises a pointing cursor placed over the corresponding tab.

14. The mobile communication terminal of claim 11, wherein the display screen comprises a touch screen, and
wherein the corresponding tab is selected by touching the corresponding tab.

15. The mobile communication terminal of claim 11, wherein the control unit controls the display unit to display the preview window on the display screen as a semi-transparent window.

16. The mobile communication terminal of claim 11, wherein the selecting unit comprises a moving or enlarging/reducing mechanism configured to move or enlarge/reduce the preview window in response to a user command.

17. The mobile communication terminal of claim 16, wherein the display screen comprises a touch screen, and
wherein the movement or the enlargement/reduction mechanism comprises a user moving or enlarging/reducing the preview window by touching and dragging the preview window on the touch screen.

18. The mobile communication terminal of claim 11, wherein the selecting unit comprises a switching mechanism configured to selectively turn on and off the displaying of the preview window.

19. The mobile communication terminal of claim 11, wherein the selecting unit comprises a setting mechanism configured to allow a user to set a number of tabs to be displayed on the display screen.

20. The mobile communication terminal of claim 11, wherein the display objects include web pages, photos, video clips, and documents.
